# EUROPEAN PATENT SPECIFICATION

(11) **EP 1 651 453 B1**
(45) Date of publication and mention of the grant of the patent: **16.06.2010**
(21) Application number: 01902344.9
(22) Date of filing: 22.01.2001
(51) Int. Cl.: B60C 15/04, B60C 9/18, B60C 9/22, B60C 3/04, B60C 15/06

(54) **TYRE WITH BEAD CORE WITH HEXAGONAL SECTION**
LUFTREIFEN MIT WULSTKERN, WELCHER EINEN HEXAGONALEN QUERSCHNITT HAT
PNEU A TRINGLE AVEC SECTION HEXAGONALE

(30) Priority: 27.01.2000 EP 00101709; 29.02.2000 US 185709 P
(43) Date of publication of application: 03.05.2006
(73) Proprietor: Pirelli Tyre S.p.A., 20126 Milano (IT)
(72) Inventor: TONEZZER, Franco, I-20052 Monza (IT); LOSI, Piero, I-20061 Carugate (IT)
(74) Representative: Giannesi, Pier Giovanni
(86) International application number: PCT/EP2001/000642
(87) International publication number: WO 2001/054929

(56) References cited:
- EP-A- 0 414 892
- EP-A- 0 938 985
- FR-A- 2 778 367
- US-A- 4 135 565
- US-A- 4 216 814
- US-A- 5 226 987
- PATENT ABSTRACTS OF JAPAN vol. 018, no. 245 (M-1603), 11 May 1994 (1994-05-11) & JP 06 032124 A (SUMITOMO RUBBER IND LTD), 8 February 1994 (1994-02-08)

## Description

This invention refers to a tyre for vehicle wheels and a bead core included in this tyre. More in particularly, the invention refers to a tyre for high or very high performance comprising a single-wire bead core with a hexagonal section.

A tyre, in general, comprises a carcass formed by at least one carcass ply shaped in a toric form, the ends of which are anchored around substantially inextensible annular elements, called bead cores, a tread and a belt structure located between the carcass and the tread. The portion of tyre which comprises the bead core is known as a bead and its function is to anchor the tyre on its respective rim. In a traditional structure, the bead usually comprises an appropriate rubber fillet with a substantially triangular section, known as bead filler.

Several types of bead cores and different bead structures are known in the state of the art.

A bead core of a known type has a transverse regular quadrangular section. Here, and in the description which follows, "transverse section" is intended as a section made by means of a plane containing the axis of rotation of the tyre. A regular quadrangular bead core can be formed, for example, starting from a rubber-coated strip, comprising five wires, substantially directed parallel to the axis of the strip itself. Here, and in the description which follows, the term "wire" is intended as a metal wire or a metal cord. The bead core is formed by winding the rubber-coated strip in a spiral, in such a way as to form five layers superimposed in a radial direction, each composed of five windings (or turns). This configuration is referred to as "5 x 5".

Here, and in the description which follows, "radial direction" is intended as a direction perpendicular to the axis of rotation of the tyre.

An example of a bead core with a regular quadrangular section is described in the patent GB 1,438,441, in the name of the same Applicant. Bead cores with a regular quadrangular section are currently used in the Applicant's tyres for high or very high performance.

The Applicant has discovered that in a bead core with a regular transverse quadrangular section, the distribution of the stress forces in the windings composing the various constructive layers of the bead core is not optimised. In particular, as will be shown better in the detailed description which follows, by means of a simulation of assembly of the tyre on a rim, the Applicant found that in the bead core with a regular quadrangular section, the stress to which the windings are subjected drops rapidly and progressively in the layers radially external to the first. This distribution of the stress values is not optimal. In fact, as the number of windings is the same in all the layers in the bead core with a regular quadrangular section, there is a waste of material (due to the high number of windings) in the radially outermost portion where, instead, the stress value is found to be very low.

The Applicant therefore tackled the technical problem of obtaining a bead core with a better distribution of the forces of stress in the windings among the various layers.

At the same time, in the tyre's working conditions, and at high speeds in particular, the bead core should have guaranteed excellent features of compactness and indeformability of the section, as well as steady support of the bead on the corresponding seat of the rim.

The Applicant perceived that the problem of the unbalancing of the stresses in the windings of the bead core could be solved by modifying the section of the bead core itself, reducing the number of windings of the radially outermost layers of the bead core.

Bead cores with sections other than a quadrangular one are known in the state of the art.

For example, a bead core is known which is formed starting from a single rubber-coated wire, with a regular transverse hexagonal section. Here, and in the description which follows, "hexagonal section" is intended as a section of which the profile can be represented by means of a polygon with six sides. The hexagonal section is regular, this intending to mean that it is symmetrical both with respect to a radial direction and with respect to an axial direction. Here, and in the description which follows, axial direction is intended as a direction parallel to the axis of rotation of the tyre. For example, a regular hexagonal bead core can be formed by 19 windings arranged in a 3-4-5-4-3 configuration. This set of numbers indicates that the single wire has been wound in such a way that it first of all constitutes three turns arranged axially side by side to form the first layer, then four turns arranged axially side by side to form the second layer, radially superimposed on those of the first layer, then five turns arranged axially side by side to form the third layer, radially superimposed on those of the second layer, then four turns again arranged axially side by side to form the fourth layer, radially superimposed on those of the third layer, and then three turns again arranged axially side by side to form the fifth layer, radially superimposed on those of the fourth layer. The layers have been numbered in accordance with their position in the radial direction: here, and in the description which follows, the first layer is intended as the radially innermost layer. Furthermore, below in the description, the notation "single-wire bead core" will be used to indicate a bead core formed by a plurality of windings of a single wire.

Examples of single-wire bead cores with a hexagonal section are given in the patent JP 02-296509 in the name of Toyo Tire & Rubber.

Other patents describe single-wire bead cores with different sections. Among these, the patents US 5,058,649 and US 5,524,688 in the name of Goodyear Tire & Rubber describe a single-wire bead core with a pentagonal section incorporated in a bead not comprising the above-mentioned bead filler.

In an alternative to the single-wire bead cores, bead cores described as "spiral" are known in the state of the art. This type of bead core is made up of a central core, formed, for example, starting from a single rubber-coated wire, around which other wires are wound in spirals in such a way as to form an external sheath. An example of a spiral bead core is given in the patent US 1,437,013 in the name of International Bead Wire Company, which describes a bead core with a central core having a triangular section formed by a single wire around which a plurality of spiral windings of another wire are wound, forming the external sheath.

After being formed in this way, the bead core is extended radially in such a way as to give the external sheath, which initially had a circular section, a section determined by the section of the central triangular core, or a hexagonal section.

Patent '013 states that the transverse section of the bead core obtained in this way is particularly suitable for tyres for vehicles for heavy-goods transport.

The Applicant has discovered that even in a single-wire bead core with a regular hexagonal section, the distribution of the stresses is not optimized and that the use of this bead core in a tyre for high performance does not provide any improvement compared with the use of a bead core with a regular quadrangular section.

The Applicant found that it is possible to obtain an optimised distribution of the stresses with a single-wire bead core having a non-regular hexagonal section, symmetrical with respect to a radial direction, and asymmetrical with respect to an axial direction, in which the radially innermost layer is formed by a greater number of windings compared with the radially outermost layer. The tyre comprising this bead core has excellent features of compactness and indeformability of the section, as well as steady support for the bead on the corresponding seat on the rim. As well as the abovementioned features, this bead core makes it possible to obtain a significant weight reduction, as well as the elimination of a series of constraints in the design of the bead region of the tyre, without moreover having to take recourse to substantial modifications with respect to the traditional structure of the bead comprising the abovementioned bead filler.

In a first aspect, the invention concerns a tyre for vehicle wheels comprising: a carcass, comprising at least one carcass ply, with the ends associated with a pair of bead cores, each of said bead cores being incorporated in a respective bead comprising a bead filler; a tread band radially external to said carcass; a pair of axially distanced sidewalls, each arranged between the respective bead and said tread band in a radial direction and in axially outermost position. Each bead core comprises a plurality of windings of a single wire, arranged axially side by side in a plurality of layers radially superimposed in such a way as to define a transverse hexagonal section with an axial width of the radially innermost layer of said plurality of layers greater than the axial width of the radially outermost layer of said plurality of layers.

Typically, the tyre also comprises a belt structure between said carcass and said tread band, comprising at least two belt strips radially superimposed on one another and comprising reinforcement cords parallel to each other in each strip and crossed with respect to the adjacent strip.

The tyre can also comprise one or more layers with reinforcement cords at 0°.

In a preferred embodiment, the tyre also comprises an underlayer placed between said belt structure and said tread band. The thickness of the underlayer can be between 1 and 3 mm.

Advantageously, the transverse section of bead filler has a profile with a base adapted to the radially external portion of the profile of the section of the bead core.

More particularly, the profile of the section of the filler comprises two axially separated protrusions which extend towards the axis of rotation of the tyre in the radial direction.

The radially outermost layer of the plurality of layers forming the bead core has a number of windings greater than or equal to two.

Preferably, the layer of the bead core with the maximum axial width has a number of windings less than or equal to ten. Even more preferably, this layer has a number of windings less than or equal to six.

In one example, the layers making up the bead core are arranged in a 4-5-4-3-2 configuration. In another example, the layers making up the bead core are arranged in a 5-6-5-4-3 configuration. In another example, the layers making up the bead core are arranged in a 5-6-5-4-3-2 configuration.

Further characteristics and advantages will become more clearly evident in the light of the detailed description of an example of a tyre and of bead core in accordance with the present invention. This description, given here below, refers to attached drawings supplied for exemplary and non-limiting purposes only, in which:
- Fig. 1 shows a transverse section of a tyre according to the present invention;
- Fig. 2 shows an enlargement of the bead region of the tyre in Fig. 1;
- Fig. 3 shows a transverse section of a an example of bead core according to known technology (regular quadrangular), as previously described;
- Fig. 4 shows a transverse section of a second example of bead core according to known technology (regular hexagonal), as previously described;
- Fig. 5 shows a transverse section of an example of bead core in accordance with the present invention;
- Fig. 6 compares the results of the simulations made respectively on the bead cores in Fig. 3 (A), Fig. 4 (B) and Fig. 5 (C) .

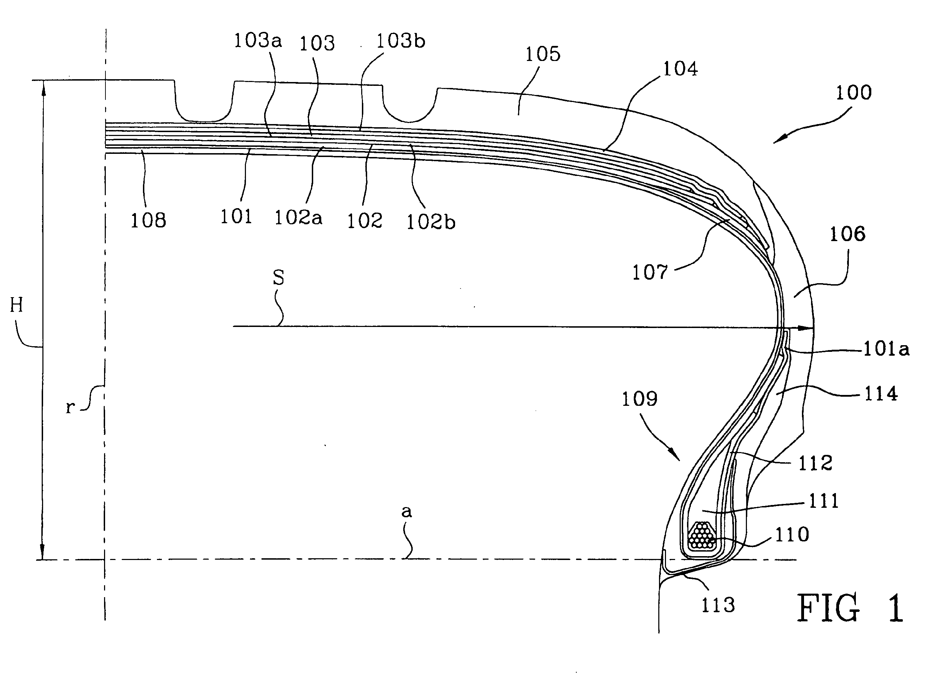

A transverse section of an example of a tyre 100 in accordance with the invention is shown in Fig. 1. The "a" indicates an axial direction while the "r" indicates a radial one. For greater descriptive clarity, the section is represented only partially as it is symmetrical with respect to the radial direction "r". The example in Fig. 1 shows a class ZR, size 265/35 tyre: this means that the chord S of the transverse section of the tyre 100 is 265 mm and the ratio H/S between the height H and the chord S of the transverse section of the tyre 100 is 0.35. Preferably, this ratio, H/S, is less than 0.65 in the tyres according to the invention.

It should be noted that the ZR class identifies very high performance tyres, with maximum achievable speeds in excess of 270 km/h. The invention applies to all kinds of tyres, but expresses its advantageous effects to an increasing extent as the tyre class increases.

The tyre 100 comprises a carcass formed by at least one carcass ply 101, the ends 101a of which are associated with a pair of bead cores 110, distanced axially from each other, each of which is incorporated in a respective bead 109, placed in a radially internal position. The carcass is preferably radial, that is, it incorporates reinforcing cords arranged substantially in a perpendicular direction with respect to a circumferential direction, that is, lying on the plane of the transverse section.

The tyre also comprises a tread band 105, located in a position radially external to the carcass, and a pair of axially distanced sidewalls 106, each arranged between the respective bead 109 and the tread band 105 in a radial direction, in axially outermost position.

In tyres with a radial carcass, a belt structure 102 is provided, comprising at least two belt strips, between the carcass and the tread band 105. In the example in Fig. 1, the belt structure 102 comprises two radially superimposed belt strips 102a and 102b. These belt strips 102a and 102b incorporate reinforcement cords, typically metal cords, parallel to each other in each strip and crossed with respect to the adjacent strip, arranged in such a way as to form a predetermined angle with respect to a circumferential direction.

One or more reinforcement layers 103 can be placed between the belt structure 102 and the tread band 105 at 0°, meaning by this that these layers incorporate reinforcement cords, typically textile cords, arranged at a very small angle (a few degrees) with respect to a circumferential direction. In the example in Fig. 1, the tyre comprises two reinforcement layers 103a and 103b at 0°.

Furthermore, an underlayer 104 can be placed between the belt structure 102 and the tread band 105, to form a structure known as "cap and base", Typically, the thickness of the underlayer is between 1 and 3 mm. Preferably, this thickness is between 1 and 1.5 mm.

The use of one of more belt end fillets 107 can be envisaged at the ends of the belt strips 102a and 102b.

In tubeless tyres, a layer of rubber coating 108, known as a liner, can also be provided in a radially internal position with respect to the carcass to provide optimum impermeability to air.

The tyre 100 is mounted on a conventional rim, not shown in Fig. 1, to form a tyre wheel.

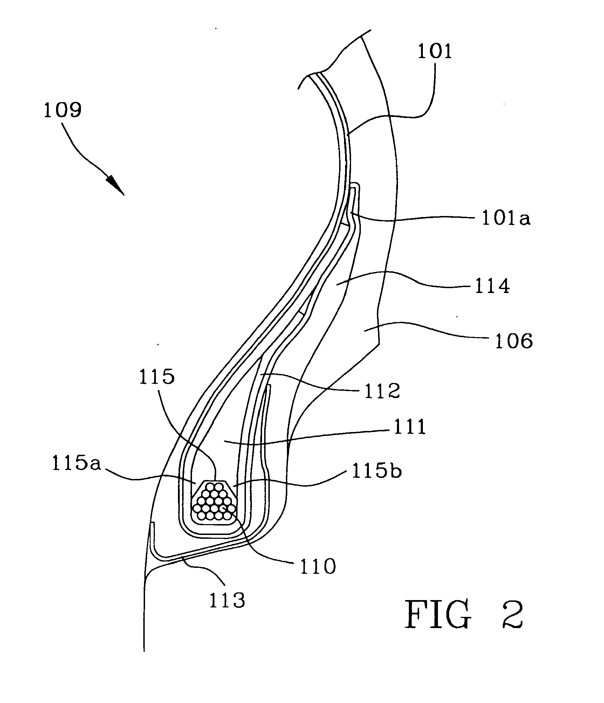

Fig. 2 shows an enlargement of the section in Fig. 1 in the region of the bead 109, illustrating its structure in a more detailed manner.

The bead 109 comprises a bead core 110 and bead filler 111, located in a radially external position with respect to the bead core 110.

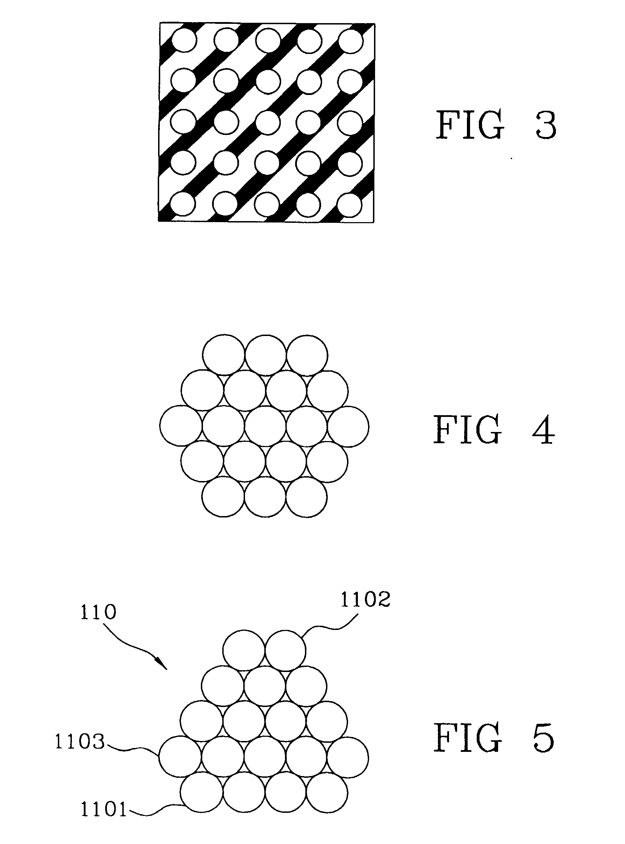

The bead core 110 is a single-wire bead core and has a transverse section with a non-regular geometrical hexagonal form, symmetrical with respect to one axis only. In the example shown on Figs. 1-2, it is formed by 18 windings of a rubber-coated wire. The bead core 110 is arranged in such a way that the axis of symmetry of its transverse section coincides with a radial direction. This means that the various layers which form the bead core are arranged substantially in an axial direction, superimposed radially with respect to one another. The structure and the geometrical form of the section of the bead core 110 will be illustrated in detail below, with reference to Fig. 5.

As it can be seen in Fig. 2, the section of the bead filler 111 has a substantially triangular profile, the base 115 of which is advantageously adapted to the radially external portion of the profile of the section of the bead core 110. In particular, the profile of the section of the bead filler 111 advantageously has two axially separated protrusions 115a and 115b, extending towards the axis of rotation of the tyre in a radial direction ("dovetail" profile).

The end 101a of the carcass ply/plies 101 forms a turn-up around the bead core 110 and the bead filler 111. A chafer 112 formed by a rubber-coated strip comprising textile cords can be added around the bead core 110 and the bead filler 111.

An abrasion-proof fillet 114 is usually placed in an axially external position with respect to the carcass turn-up in order to protect the carcass from possible lacerations caused by the continuous rubbing of the bead 109 on the rim. The radially internal part of the sidewall 106 then encloses the bead 109 in an axially external position. Another rubber-coated sheet 113, comprising typically textile cords, can be inserted into the bead 109 as further reinforcement.

An example of bead core used in this invention is shown in section in Fig. 5, formed by 18 windings of a single rubber-coated wire, arranged in a 4-5-4-3-2 configuration. This series of numbers indicates that the single wire has been wound in such a way as to first of all form four turns arranged axially side by side to form the first layer, then five turns arranged axially side by side to form the second layer, superimposed radially on those of the first layer, then four turns arranged axially side by side to form the third layer, superimposed radially on those of the second layer, then three turns arranged axially side by side to form the fourth layer, superimposed radially on those of the third layer, and then two turns arranged axially side by side to form the fifth layer, superimposed radially on those of the fourth layer.

The section of the bead core 110 is non-regular and hexagonal, symmetrical with respect to a radial direction and non-symmetrical with respect to an axial direction. The hexagonal section has a larger base side and a smaller base side. The larger base side is formed by the set of windings which make up the first layer 1101, that is, the radially innermost layer: there are four windings in the example shown in Fig. 5. The smaller base side is formed by the set of windings which make up the fifth layer 1102, that is, the radially outermost layer: there are two windings in the example shown in Fig. 5.

The number of windings which make up the radially outermost layer 1102 is smaller than the number of windings which make up the radially innermost layer 1101. In other words, the axial width of the radially outermost layer 1102 is smaller that the axial width of the radially innermost layer 1101.

The number of windings in the radially outermost layer 1102 is no less than two. A configuration with a single winding for making up the radially outermost layer 1102 would give the bead core a pentagonal or "drop-shaped" section, with the "tip" turned towards the bead filler. This "tip" is undesirable as it can trigger the breaking of the bead filler itself. During the life of the tyre, in fact, the bead filler is subjected to continuous stresses transmitted by the carcass. These stresses can be the cause of sliding and/or oscillations of the bead filler against the radially outermost layers of the bead core: a radially outermost "tip", caused by a pentagonal section of the bead core would therefore represent an extremely critical factor.

The hexagonal section of the bead core 110 has its maximum axial width in correspondence with a layer 1103 external to the radially innermost layer 1101. This layer 1103 has five windings in the example in Fig. 5. The layer 1103 with the maximum axial width is in the radially innermost part, subdividing the hexagonal section of the bead core 110 radially into two parts having the same height. This makes it possible to get very stable support for the bead on the corresponding seat in the rim, with a notable improvement in the dirving behaviour characteristics, in particular at the limit of the adherence conditions.

Preferably, the number of windings of the layer 1103 with the maximum axial width, or the maximum number of windings per layer of the bead core 110, is no greater than ten. Even more preferably, this maximum number of windings per layer is no greater than six. The layer 1101, radially internal to the layer 1103 with the maximum axial width, having a smaller axial width with respect to said maximum axial width, advantageously facilitates the wrapping of the carcass around the bead core itself, in such a way as not to create "tips" turned towards the carcass itself.

The bead core 110 can be produced using methods and machines which are conventional in the technology for producing single-wire bead cores, for example winding the single rubber-coated metal wire around a rigid spindle the number of times necessary to produce the desired section. The wire used is preferably a steel wire with a modulus of elasticity between 195,000 MPa and 215,000 Mpa. The section of the wire is preferably circular, with a diameter between 0.8 mm and 1.4 mm, preferably between 0.96 mm and 1.27 mm.

Other configurations of single-wire bead core with a non-regular hexagonal transverse section with the radially innermost layer having an axial width greater than the axial width of the radially outermost layer can be made.

The minimum configuration is a 3-4-3-2 configuration with 12 windings. Other particularly preferred configurations are: 5-6-5-4-3 with 23 windings and 5-6-5-4-3-2 with 25 windings.

To check the distribution of the stress forces in the windings forming the different layers of the bead core 110 in Fig. 5 and compare it with the same distribution in the known bead cores in Figs. 3 and 4, the Applicant simulated an assembly test of a tyre on a rim, by means of a finite-element model.

In practice, the application of the same stress to every winding forming the radially innermost layer of the bead core was simulated and the corresponding stress values in the windings of the radially outermost layers were obtained from the model. A stress force applied to the wires of the bead core translates into an elongation of the wires themselves; in particular, the force applied in the test corresponded to that which provokes a deformation of the bead core to such an extent as to allow the bead core itself to spread over the seat in a rim.

The stress applied to each winding making up the radially innermost layer of the bead core was 100 kgf. The simulation was carried out on a 5x5 bead core, as illustrated in Fig. 3, on a single-wire hexagonal regular bead core with a 3-4-5-4-3 configuration with 19 windings, as illustrated in Fig. 4, and on a single-wire hexagonal non-regular bead core with a 4-5-4-3-2 configuration with 18 windings, as illustrated in Fig. 5. The three bead cores were formed starting from wires having the same diameter and same modulus of elasticity, rubber coated with mixtures having identical characteristics.

It should be noted that it is possible to directly compare the results obtained with each other, as the three bead cores have the same dimensions, determined by the five layers radially superimposed and by a maximum number of five windings per layer.

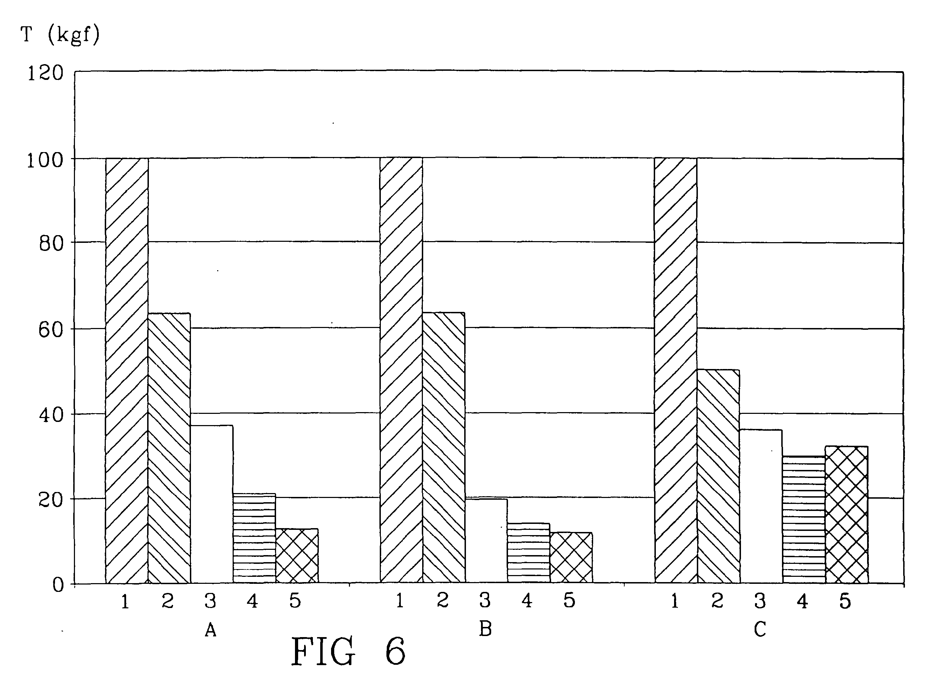

The overall results obtained are shown in Fig. 6 in which: the stress values obtained in the windings in the 5x5 bead core in Fig. 3 are grouped in A; the stress values obtained in the windings in the single-wire hexagonal regular bead core in Fig. 4 are grouped in B; the stress values obtained in the windings in the bead core of the invention in Fig. 5 are grouped in C.

For each grouping A, B and C, the different bars represent the stress value in each winding belonging to the different radially superimposed layers: the layers have been numbered from 1 to 5 with the usual notation, where the layer indicated with 1 is the radially innermost one and the layer indicated by 5 is the radially outermost one.

The stress value T obtained for each winding is shown on the ordinate. We analyse the groupings one by one.

Grouping A (quadrangular regular 5x5): with a stress of 100 kgf applied to every winding of layer 1, it can be seen that the windings of the radially external layers are subjected to progressively decreasing stresses. In the 5x5 bead core, the radially external layers (4, 5) are therefore made up of wires which are subjected to low stress during the use of the tyre, as during the phases of fitting and removing the tyre from the rim. As the number of windings in layers 4 and 5 is the same as the number of windings in the radially innermost layers 1, 2 and 3, there is an excess of material in a region subjected to low stress.

Grouping B (hexagonal regular 3-4-5-4-3 with 19 windings): with a stress of 100 kgf applied to every winding of layer 1, it can be seen that the windings of the radially external layers are subjected to progressively decreasing stresses to an even more accentuated degree than in the previous case. Though the single-wire hexagonal regular bead core with 19 windings has a lower weight than the weight of the 5x5 bead core with a regular quadrangular section, it does not solve the problem of the optimisation of the distribution of the stresses and indeed makes it worse.

Grouping C (hexagonal non-regular 4-5-4-3-2 with 18 windings): with a stress of 100 kgf applied to every winding of layer 1, it can be seen that the windings making up the layers 2 to 5 are subjected to stresses which are much closer together. In particular, the windings of layer 3 are subjected to a stress which is substantially identical to that obtained in the corresponding layer 3 of the regular quadrangular bead core, as well as substantially double that obtained in the corresponding layer 3 of the hexagonal regular bead core. The windings of the radially outermost layers, 4 and 5, are subjected to higher stresses than those obtained in the corresponding layers of both the bead cores being compared, with an evident improvement especially in the layer 5 windings where the value is substantially treble compared with the corresponding ones. The structure of the bead core of the invention is therefore more optimised, with a better distribution of the stress forces between the windings and with a considerable weight reduction (18 windings compared with 25, about 33%) compared with the 5x5 regular quadrangular bead core. It should be noted that a weight reduction is also obtained compared with the regular hexagonal bead core (18 windings compared with 19).

A series of tests was then carried out to validate the finite-element analysis, making three sets of tyres whose only difference was the kind of bead core used and testing them on the road and track with dry asphalt. These were tyres named PZERO, by the Applicant itself, size 235/45, mounted and inflated on rims with 17" diameter and an axial width of 8", with an inflation pressure of 2.3 bar. The first set of tyres was made by putting in a single-wire bead core having a regular hexagonal section and 19 windings with a 3-4-5-4-3 configuration (comparison); the second set was made by putting in a single-wire bead core having a non-regular hexagonal section and 18 windings with a 4-5-4-3-2 configuration (invention); the third set was made by putting in a 5P x 5 bead core having a regular quadrangular section (comparison).

The test car was a BMW M3. The temperature at the time of the test was 24°C.

Three different types of tests were carried out: rectilinear travel, behaviour driven at normal speed. (soft handling), and behaviour at the limit of adherence (hard handling).

As far as the rectilinear travel tests were concerned, the tester assessed: centring on a flat surface, that is the capacity of the tyre to maintain the straight line on a surface without great roughness without the need for frequent steering corrections; the steering stiffness at zero, that is the load felt at the steering wheel for small steering angles.

As far as the soft handling tests were concerned, the tester assessed: emptiness in the centre, that is the delay and the degree of response of the vehicle to small steering angles; the promptness of response to the steering coming into a bend; the progressiveness of response to the steering travelling in a bend; centring in a bend, that is the tyre's capacity to keep the vehicle on a bend with a constant radius without continuous steering corrections; realignment, that is the capacity of the tyre to allow the vehicle to return to a rectilinear trajectory at the exit of a bend with contained and dampened transverse oscillations.

As far as the hard handling tests were concerned, the tester assessed: the force on the steering wheel when turning violently; the promptness of insertion, that is the behaviour of the tyre in transition at the entrance of the bend taken at the limit speed; the balancing, that is the degree of over-steering or under-steering of the vehicle; the yield, that is the tyre's capacity to absorb a strong fast transfer of the load as a consequence of a sudden change of lane without excessive deformation, and therefore without compromising vehicle stability and controllability; release in a bend, that is the tyre's capacity to dampen the effects of instability resulting from the sudden release of the accelerator during a bend taken at the limit speed; controllability, that is the tyre's capacity to maintain and/or return the vehicle to the trajectory after the loss of adherence.

Table 1 sums up the tester's score sheet for the tyre's controllability. It should be noted that the scale of values runs from a minimum of 4 to a maximum of 9.

As it can be seen, the set of tyres with the bead core according to the invention has notably better characteristics compared with the set of tyres with bead core for comparison with the regular hexagonal section. This confirms the greater stability of support on the corresponding seat in the rim, in running conditions, of the bead comprising a non-regular hexagonal bead core compared with what can be obtained with a bead core with a regular hexagonal section.

Furthermore, there is an improvement compared with the set of tyres with bead core with a regular quadrangular section in the items concerning rectilinear travel and soft handling. As far as behaviour at the limit of adherence is concerned, the assessment was substantially identical for the two sets of tyres.

**Table 1**

| | | Single-wire hexagonal regular (comparison) | Single-wire hexagonal non-regular (invention) | Quadrangular regular (comparison) |
|---|---|---|---|---|
| Rectilinear travel | Centring | 7 | 8 | 7 |
| | Steering stiffness at zero | 7 | 8 | 8 |
| | | | | |
| Steering behaviour (Soft handling) | Emptiness at the centre | 7 | 8 | 8 |
| | Promptness | 7 | 8 | 8 |
| | Progressiveness | 7 | 7 | 7 |
| | Centring in bend | 7 | 8 | 7 |
| | Realignment | 7 | 8 | 7 |
| | | | | |
| Behaviour at limit (Hard handling) | Force on steering wheel | 7 | 7 | 8 |
| | Promptness of insertion | 7 | 7 | 7 |
| | Balancing | 6 | 6 | 6 |
| | Yield | 6 | 7 | 7 |
| | Release in bend | 6 | 7 | 7 |
| | Controllability | 6 | 7 | 7 |

The result of the above tests therefore highlights that as far as behaviour on the road in concerned, the use of a single-wire bead core with a non-regular hexagonal section similar to the one shown in Fig. 5 makes it possible to improve the tyre's behaviour characteristics, without affecting the other structural characteristics of the tyre itself, both compared with a bead core with a regular hexagonal section, and compared with a bead core with a regular quadrangular section.

The improvements compared with a tyre comprising a regular quadrangular bead core have been obtained with considerable further advantages.

First of all, the use of a single-wire bead core allows the problems of uniformity inside the tyre to be considerably reduced. The regular quadrangular bead core presents in fact a fairly extensive overlap region which cannot be eliminated and which is due to the way the bead core is made. As the strip of rubber-coated wires from which the bead core is formed has a given thickness, in the regions close to the ends of the strip itself there is a rise in the thickness of the bead core across its entire axial width, which is the source of a lack of uniformity inside the tyre. With a single-wire bead core, the overlap problem has been substantially eliminated as a whole, to the complete advantage of the uniformity of the tyre.

A further advantage, already highlighted above, comes from the considerable weight reduction. The bead core of the invention makes it possible to obtain better tyre behaviour characteristics with a lower number of windings of metal wire and with a much smaller presence of rubber compared with that used in the bead cores with a regular quadrangular section. For the same tyre and size used, the bead core of the invention with 18 windings and a 4-5-4-3-2 configuration permits a net weight reduction of 33% compared with a quadrangular 5x5 bead core. There is also a reduction in weight compared with the bead core with a regular hexagonal section and 19 windings with a 3-4-5-4-3 configuration, thanks to the lower number of windings of metal wire.

The lesser rubber coating on the bead core of the invention compared with the rubber coating on the bead core with a regular quadrangular section makes it possible to obtain a bead core section which is virtually unchanged along the longitudinal development of the bead core itself in the manufactured and vulcanized tyre. This is because during the vulcanization phase the rubber coating of the bead core tends to arrange itself randomly and not according to the pre-established layers: the smaller quantity of rubber therefore increases the compactness of the bead core and guarantees that its section will be substantially unchanged along the entire longitudinal development.

The particular section selected also makes it possible to gain other advantages in the design of the tyre.

As in the outermost radial layers there is a progressive drop in the number of windings, and therefore in the axial width of the bead core, it is possible to use a bead filler with a transverse section which is slightly modified with respect to the usual triangular section starting from the layer 1103 with the higher axial width and proceeding in a radial direction away from the axis of rotation of the tyre. The bead filler with a dovetail section 111, shown in Fig. 1 and in greater detail in Fig. 2, suitable for perfect support on the transverse section of the bead core with a hexagonal section, is considerably more flexible in the axial direction compared with the traditional bead filler with a triangular section: this makes it possible to obtain an extra degree of freedom during the design phase of the bead region.

A further advantage in the design phase also comes from the reduction of the axial width of the radially innermost layer of the bead core, that is, of the support base of the bead core itself. In fact, for the same tyre and size used, the single-wire bead core with non-regular hexagonal section and 4-5-4-3-2 configuration in fact has a smaller axial width of the radially internal layer compared with a quadrangular 5Px5 bead core (one winding less) and the radially internal part of its section facilitates the turn-up of the carcass ply/plies around the bead core itself. This makes it possible to obtain a carcass turn-up with a lower radius and therefore to obtain an extra degree of freedom during the design phase, of the tyre sidewall for example.

## Claims

1. Tyre for vehicle wheels comprising: a carcass, said carcass comprising at least one carcass ply (101), having ends (101a) associated with a pair of bead cores (110), each of said bead cores being incorporated in a respective bead (109), said bead comprising a bead filler (111) ; a tread band (105) radially external to said carcass; a pair of axially distanced sidewalls (106), each placed between the respective bead (109) and said tread band (105) in a radial direction and in an axially outermost position; and the ratio between the height (H) and the chord (S) of the transverse section of the tyre is less than 0.65, **characterized in that** each bead core (110) comprises a plurality of windings of a single wire, axially arranged side by side in a plurality of radially superimposed layers in such a way as to define a transverse hexagonal section, and the axial width of the radially innermost layer (1101) of said plurality of layers is greater than the axial width of the radially outermost layer (1102) of said plurality of layers.

2. Tyre according to Claim 1, further comprising a belt structure (102) between said carcass and said tread band (105), said belt structure comprising at least two belt strips (102a, 102b) radially superimposed on one another, each belt strip (102a, 102b) comprising reinforcement cords parallel to each other in each strip and crossed with respect to the adjacent strip.

3. Tyre according to claim 2, further comprising at least one reinforcement layer at 0° (103) located between said belt structure (102) and said tread band (105).

4. Tyre according to claim 3, comprising two reinforcing layers (103a, 103b) at 0°.

5. Tyre according to claim 2, further comprising an underlayer (104) located between said belt structure (102) and said tread band (105).

6. Tyre according to claim 5, **characterized in that** the thickness of the underlayer (104) is between 1 and 3 mm.

7. Tyre according to claim 1, **characterized in that** said H/S ratio is less than or equal to 0.45.

8. Tyre according to claim 1, **characterized in that** the transverse section of said bead filler (111) has a profile with a base adapted to the radially outermost part of the profile of the section of said bead core (110).

9. Tyre according to claim 8, **characterized in that** the profile of the section of said filler (111) comprises two axially separated protrusions (115a, 115b) extending towards the axis of rotation of said tyre in a radial direction.

10. Tyre according to claim 1, **characterized in that** the radially outermost layer (1102) of said plurality of layers has a number of windings which is greater than or equal to two.

11. Tyre according to claim 1, **characterized in that** the layer with the maximum axial width (1103) of said plurality of layers has a number of windings less than or equal to ten.

12. Tyre according to claim 11, **characterized in that** the layer with the maximum axial width (1103) has a number of windings less than or equal to six.

13. Tyre according to claim 1, **characterized in that** it is suitable for achieving speeds in excess of 270 Km/h.

14. Tyre according to claim 1, **characterized in that** said transverse hexagonal section is symmetrical versus a radial direction of the tyre.

15. Tyre according to claim 14, **characterized in that** said radially superimposed layers of said bead core are arranged substantially in an axial direction.

16. Tyre according to claim 1, **characterized in that** said single wire is a steel wire with a modulus of elasticity between 195,000 MPa and 215,000 Mpa.

17. Tyre according to claim 1, **characterized in that** said single wire has a circular section, with a diameter comprised between 0.8 mm and 1.4 mm.

18. Tyre according to claim 17, **characterized in that** said diameter is comprised between 0.96 mm and 1.27 mm.

19. Tyre according to claim 1, **characterized in that** said radially superimposed layers are arranged in a 4-5-4-3-2 configuration.

20. Tyre according to claim 1, **characterized in that** said radially superimposed layers are arranged in a 5-6-5-4-3 configuration.

21. Tyre according to claim 1, **characterized in that** said radially superimposed layers are arranged in a 5-6-5-4-3-2 configuration.

## Patentansprüche

1. Reifen für Fahrzeugräder, der umfasst:
eine Karkasse, wobei die Karkasse wenigstens eine Karkassenlage (101) umfasst, die Enden (101a) aufweist, die mit einem Paar von Wulstrandkernen (110) assoziiert sind, wobei jeder der Wulstrandkerne in einem entsprechenden Wulstrand (109) enthalten ist, wobei der Wulstrand einen Wulstrandfüller (111) umfasst;
ein Laufflächenband (105), das sich radial zur Karkasse erstreckt;
ein Paar von axial beabstandeten Seitenwänden (106), wobei jede zwischen dem entsprechenden Wulstrand (109) und dem Laufflächenband (105) in einer radialen Richtung und einer axial äußersten Position positioniert ist; und wobei
das Verhältnis zwischen der Höhe (H) und der Sehne (S) des Querschnitts des Reifens kleiner als 0,65 ist,
**dadurch gekennzeichnet, dass**
jeder Wulstrandkern (110) eine Mehrzahl von Windungen einer einzigen Ader umfasst, die Seite an Seite in einer Mehrzahl von radial sich überlagernden Schichten auf eine solche Weise angeordnet sind, um einen hexagonalen Querschnitt zu definieren, und
die axiale Breite der radial innersten Schicht (1101) der Mehrzahl von Schichten größer als die axiale Breite der radial äußersten Schicht (1102) der Mehrzahl von Schichten ist.

2. Reifen nach Anspruch 1, der ferner eine Gürtelstruktur (102) zwischen der Karkasse und dem Laufflächenband (105) umfasst, wobei die Gürtelstruktur wenigstens zwei Gürtelstreifen (102a, 102b) umfasst, die aufeinander überlagert sind, wobei jeder Gürtelstreifen (102a, 102b) Verstärkungskorde parallel zueinander in jedem Streifen und überkreuz bezüglich zu dem benachbarten Streifen umfasst.

3. Reifen nach Anspruch 2, der ferner wenigstens eine Verstärkungsschicht bei 0° (103) umfasst, die zwischen der Gürtelstruktur (102) und dem Laufflächenband (105) positioniert ist.

4. Reifen nach Anspruch 3, der zwei Verstärkungsschichten (103a, 103b) bei 0° umfasst.

5. Reifen nach Anspruch 2, der ferner eine Unterschicht (104), die zwischen der Gürtelstruktur (102) und dem Laufflächenband (105) positioniert ist, umfasst.

6. Reifen nach Anspruch 5, **dadurch gekennzeichnet, dass** die Dicke der Unterschicht (104) zwischen 1 und 3 mm liegt.

7. Reifen nach Anspruch 1, **dadurch gekennzeichnet, dass** das H/S-Verhältnis kleiner oder gleich 0,45 ist.

8. Reifen nach Anspruch 1, **dadurch gekennzeichnet, dass** der Querschnitt des Wulstrandfüllers (111) ein Profil mit einer Basis aufweist, die an den radial äußersten Teil des Profils des Bereichs des Wulstrandkerns (110) angepasst ist.

9. Reifen nach Anspruch 8, **dadurch gekennzeichnet, dass** das Profil des Bereichs des Füllers (111) zwei axial getrennte Vorsprünge (115a, 115b) umfasst, die sich zur Drehachse des Reifens in einer radialen Richtung erstrecken.

10. Reifen nach Anspruch 1, **dadurch gekennzeichnet, dass** die radial äußerste Schicht (1102) der Mehrzahl von Schichten eine Anzahl von Windungen aufweist, die größer als oder gleich zwei ist.

11. Reifen nach Anspruch 1, **dadurch gekennzeichnet, dass** die Schicht mit der maximalen axialen Breite (1103) der Mehrzahl von Schichten eine Anzahl von Windungen aufweist, die kleiner als oder gleich zehn ist.

12. Reifen nach Anspruch 11, **dadurch gekennzeichnet, dass** die Schicht mit der maximalen axialen Breite (1103) eine Anzahl von Windungen aufweist, die kleiner als oder gleich sechs ist.

13. Reifen nach Anspruch 1, **dadurch gekennzeichnet, dass** dieser zum Erzielen von Geschwindigkeiten von über 270 km/h geeignet ist.

14. Reifen nach Anspruch 1, **dadurch gekennzeichnet, dass** der hexagonale Querschnitt bezüglich einer radialen Richtung des Reifens symmetrisch ist.

15. Reifen nach Anspruch 14, **dadurch gekennzeichnet, dass** die sich radial überlagernden Schichten des Wulstrandkerns im Wesentlichen in einer axialen Richtung angeordnet sind.

16. Reifen nach Anspruch 1, **dadurch gekennzeichnet, dass** die einzige Ader ein Stahldraht mit einem Elastizitätsmodul zwischen 195.000 MPa und 215.000 MPa ist.

17. Reifen nach Anspruch 1, **dadurch gekennzeichnet, dass** die einzige Ader einen kreisförmigen Querschnitt mit einem Durchmesser im Bereich von 0,8 mm bis 1,4 mm aufweist.

18. Reifen nach Anspruch 17, **dadurch gekennzeichnet, dass** der Durchmesser im Bereich von 0,96 mm bis 1,27 mm liegt.

19. Reifen nach Anspruch 1, **dadurch gekennzeichnet, dass** die sich radial überlagernden Schichten in einer 4-5-4-3-2 Konfiguration angeordnet sind.

20. Reifen nach Anspruch 1, **dadurch gekennzeichnet, dass** die sich radial überlagernden Schichten in einer 5-6-5-4-3 Konfiguration angeordnet sind.

21. Reifen nach Anspruch 1, **dadurch gekennzeichnet, dass** die sich radial überlagernden Schichten in einer 5-6-5-4-3-2 Konfiguration angeordnet sind.

## Revendications

1. Pneu pour roues de véhicule comprenant : une carcasse, ladite carcasse comprenant au moins un pli de carcasse (101), ayant des extrémités (101a) associées à une paire de tringles (110), chacune des tringles précitées étant incorporée dans un talon respectif (109), lequel comprend un bourrage sur talon (111) ; une bande de roulement (105) radialement extérieure à la carcasse ; une paire de flancs (106) espacés axialement, placés chacun entre le talon respectif (109) et ladite bande de roulement (105) en direction radiale et dans une position axiale extérieure extrême, et le rapport entre la hauteur (H) et la corde (S) de la section transversale du pneu est inférieur à 0,65, **caractérisé en ce que** chaque tringle (110) comprend plusieurs enroulements d'un fil métallique unique, agencés axialement côte à côte en plusieurs couches radialement superposées de façon à définir une section transversale hexagonale, et la largeur axiale de la couche radialement la plus intérieure (1101) desdites plusieurs couches est plus grande que la largeur axiale de la couche radialement la plus extérieure (1101) desdites plusieurs couches.

2. Pneu selon la revendication 1, comprenant en outre, entre la carcasse et la bande de roulement (105), une structure de ceinture (102) comprenant au moins deux bandes de ceinture (102a, 102b) radialement superposées l'une sur l'autre, chaque bande de ceinture (102a, 102b) comprenant des câbles de renfort parallèles l'un à l'autre dans chaque bande et croisés par rapport à la bande adjacente.

3. Pneu selon la revendication 2, comprenant en outre au moins une couche de renfort à 0° (103) entre la structure de ceinture (102) et la bande de roulement (105).

4. Pneu selon la revendication 3, comprenant deux couches de renfort (103a, 103b) à 0°.

5. Pneu selon la revendication 2, comprenant en outre une sous-couche (104) située entre la structure de ceinture (102) et la bande de roulement (105).

6. Pneu selon la revendication 5, **caractérisé en ce que** l'épaisseur de la sous-couche (104) est comprise entre 1 et 3 mm.

7. Pneu selon la revendication 1, **caractérisé en ce que** ledit rapport H/S est inférieur ou égal à 0,45.

8. Pneu selon la revendication 1, **caractérisé en ce que** la section transversale du bourrage sur tringle (111) a un profil avec une base adaptée à la partie radialement la plus extérieure du profil de la section de la tringle (110).

9. Pneu selon la revendication 8, **caractérisé en ce que** le profil de la section dudit bourrage (111) comprend deux saillies séparées axialement (115a, 115b) s'étendant vers l'axe de rotation du pneu dans une direction radiale.

10. Pneu selon la revendication 1, **caractérisé en ce que** la couche radialement la plus extérieure (1102) desdites plusieurs couches a un nombre d'enroulements qui est supérieur ou égal à 2.

11. Pneu selon la revendication 1, **caractérisé en ce que** la couche ayant la plus grande largeur axiale (1103) desdites plusieurs couches a un nombre d'enroulements inférieur ou égal à dix.

12. Pneu selon la revendication 11, **caractérisé en ce que** la couche ayant la plus grande largeur axiale (1103) desdites plusieurs couches a un nombre d'enroulements inférieur ou égal à six

13. Pneu selon la revendication 1, **caractérisé en ce qu'**il convient pour réaliser des vitesses supérieures à 270 km/h.

14. Pneu selon la revendication 1, **caractérisé en ce que** ladite section transversale hexagonale est symétrique relativement à une direction radiale du pneu.

15. Pneu selon la revendication 14, **caractérisé en ce que** lesdites couches radialement superposées de la tringle sont agencées sensiblement dans une direction axiale.

16. Pneu selon la revendication 1, **caractérisé en ce que** ledit fil métallique unique est un fil d'acier avec un module d'élasticité entre 195 000 MPa et 215 000 MPa

17. Pneu selon la revendication 1, **caractérisé en ce que** ledit fil métallique unique a une section circulaire avec un diamètre compris entre 0,8 mm et 1,4 mm.

18. Pneu selon la revendication 17, **caractérisé en ce que** ledit diamètre est compris entre 0,96 mm et 1,27 mm.

19. Pneu selon la revendication 1, **caractérisé en ce que** lesdites couches radialement superposées sont agencées dans une configuration 4-5-4-3-2.

20. Pneu selon la revendication 1, **caractérisé en ce que** lesdites couches radialement superposées sont agencées dans une configuration 5-6-5-4-3.

21. Pneu selon la revendication 1, **caractérisé en ce que** lesdites couches radialement superposées sont agencées dans une configuration 5-6-5-4-3-2.
